# EUROPÄISCHE PATENTSCHRIFT

(11) **EP 1 395 427 B1**
(45) Veröffentlichungstag und Bekanntmachung des Hinweises auf die Patenterteilung: **21.06.2006**
(21) Anmeldenummer: 02743114.7
(22) Anmeldetag: 27.05.2002
(51) Int. Cl.: B32B 38/06, B42D 15/10, G06K 19/16

(54) **VERFAHREN UND VORRICHTUNG ZUR HERSTELLUNG EINES TRAGBAREN DATENTRÄGERS**
METHOD AND DEVICE FOR PRODUCING A PORTABLE DATA CARRIER
PROCEDE ET DISPOSITIF POUR FABRIQUER UN SUPPORT DE DONNEES PORTABLE

(30) Priorität: 30.05.2001 DE 10126368
(43) Veröffentlichungstag der Anmeldung: 10.03.2004
(73) Patentinhaber: Giesecke & Devrient GmbH, 81677 München (DE)
(72) Erfinder: HOPPE, Joachim, 81377 München (DE); HOHMANN, Arno, 81369 München (DE)
(74) Vertreter: Klunker . Schmitt-Nilson . Hirsch
(86) Internationale Anmeldenummer: PCT/EP2002/005802
(87) Internationale Veröffentlichungsnummer: WO 2002/096646

(56) Entgegenhaltungen:
- EP-A- 1 046 515
- WO-A-00/50238
- WO-A-01/29764
- WO-A-96/15912
- DE-A- 19 647 153
- US-A- 5 034 081

## Beschreibung

Die Erfindung betrifft ein Verfahren nach der Gattung des Hauptanspruchs. Insbesondere betrifft sie ein Verfahren zur Herstellung eines tragbaren Datenträgers mit einer auf einer Seite zumindest bereichsweise eingeprägten Oberflächenstruktur, bei dem der Datenträger durch Zusammenfügen mehrerer Schichten erzeugt wird. Darüber hinaus betrifft die Erfindung eine Fertigungsanlage nach der Gattung des unabhängigen Anspruchs 10.

Um Fälschungen von oder Manipulationen an Datenträgern wie beispielsweise Ausweiskarten, Kreditkarten; EC-Karten oder dergleichen zu erschweren bzw. zu verhindern, werden diese Datenträger mit besonderen Sicherheitsmerkmalen versehen. Vorzugsweise werden hierzu Sicherheitsmerkmale verwendet, die einerseits einen auffälligen, leicht sichtbaren, aber nicht kopierbaren visuellen Effekt aufweisen und die andererseits eine möglichst kostengünstige Herstellung der Datenträger erlauben. Ein derartiges Sicherheitsmerkmal ist beispielsweise eine in die Oberfläche einer Ausweiskarte eingeprägte Oberflächenstruktur in Form einer Linsenstruktur, durch die unter verschiedenen Blickwinkeln unterschiedliche Bilder, sogenannte "Kippbilder", sichtbar sind. Die Linsenstruktur ist hierbei in eine transparente Deckschicht des Datenträgers eingeprägt. Es handelt sich bevorzugt um ein Zylinderlinsenraster. Durch dieses Linsenraster hindurch werden mittels eines Lasers Informationen in darunter liegende Volumenbereiche des Datenträgerkörpers eingebracht, die als geschwärzte Bereiche visuell gut zu erkennen sind. Aufgrund der Fokuswirkung der Linsen werden nur schmal begrenzte Bereiche des Datenträgers geschwärzt, so daß die Informationen lediglich unter dem Betrachtungswinkel beobachtet werden können, der dem Einfallswinkel des Lasers auf die Linsenstruktur entspricht. Auf diese Weise können bei Verwendung verschiedener Beschriftungswinkel mehrere, jeweils nur unter bestimmten Betrachtungswinkeln erkennbare Informationen eingeschrieben werden, wodurch der "Kippbild"-Effekt erzeugt wird.

Derartige Sicherheitsmerkmale werden auch als MLI (Multiple Laser Images) bezeichnet. MLIs sind entweder nur schwer oder überhaupt nicht zu kopieren, so daß Fälschungen oder manipulierte Datenträger sofort und ohne großen Aufwand erkennbar sind.

Die eingangs genannten Datenträger mit einem mehrschichtigen, d. h. mindestens zweischichtigen Aufbau - wie dies bei Chipkarten üblicherweise der Fall ist - werden in der Regel mittels einer Kaschierplattentechnik hergestellt, bei der die einzelnen Datenträgerschichten übereinander zwischen zwei Kaschierplatten gelegt werden und unter Wärme und Druckeinwirkung laminiert werden. In der DE 196 47153 A1 werden hierbei Methoden beschrieben, um mit dem Kaschiervorgang gleichzeitig auf dem herzustellenden mehrschichtigen Datenträger eine Oberflächenstruktur mittels einer auf der Kaschierplatte ausgebildeten Prägestruktur zu erzeugen. Darüber hinaus werden Verfahren genannt, bei denen beim Laminiervorgang eine thermostabile Prägeplatte zwischen der Deckschicht des Datenträgers und der Kaschierplatte eingelegt wird.

Eine weitere Möglichkeit zur Herstellung der eingangs genannten Datenträger besteht darin, die fertigen Einzelkarten nach der Herstellung zu prägen.

Alle diese bekannten Methoden des Einprägens der Oberflächenstruktur in den fertigen Datenträger bei oder nach dem Laminiervorgang haben den Nachteil, daß der Prägevorgang den Datenträger prinzipiell in Form von Verzügen und Deformationen schädigen kann. Hierdurch wird der Ausschuß bei der Fertigung erheblich erhöht.

Aus der US-A-5,034,081 ist ein Verfahren zur Herstellung einer Chipkarte mit erhabenen, geprägten Strukturen an der Oberfläche bekannt. Danach wird eine zweischichtige, aus einer Deck- und einer Füllschicht bestehende Schichtanordnung bereitgestellt und geprägt. Die Füllschicht dient dabei zur Unterfütterung der in der Deckschicht erzeugten, erhabenen Prägungen. Nicht zur Unterfüllung dienendes Füllschichtmaterial wird anschließend entfernt. Es entsteht ein Halbzeug mit einer glatten Unterfläche, das auf einen Kartenkörper einer Plastikkarte aufgebracht wird. Das Verfahren liefert stabile Prägestrukturen, erfordert aber die vollständige verfahrenstechnische Berücksichtigung einer zusätzlichen Materialkomponente, nämlich des Füllmaterials. Insgesamt erhöht sich dadurch der Fertigungsaufwand.

Es ist Aufgabe der Erfindung, ein Verfahren und eine Fertigungsanlage anzugeben, die auf einfache und kostengünstige Weise ein Einbringen von Oberflächenstrukturen in einen Datenträger erlaubt, ohne daß der fertige Datenträger geschädigt wird.

Diese Aufgabe wird gelöst durch ein Verfahren mit den Merkmalen des Anspruchs 1 sowie durch eine Fertigungsanlage mit den Merkmalen des unabhängigen Anspruchs 10. Weitere vorteilhafte Ausgestaltungen und zweckmäßige Weiterbildungen der Erfindung sind durch die Merkmale der abhängigen Ansprüche gegeben.

Erfindungsgemäß wird der Prägevorgang zur Erzeugung der Oberflächenstruktur an einem vorlaminierten Halbzeug durchgeführt. Anschließend erfolgt der vollständige Kartenaufbau unter Verwendung einer Klebeschicht, d. h. in einem "Kaltfügeverfahren". Da die der Oberflächenprägung gegenüberliegende Rückseite des Halbzeugs in der Endfertigung des Kartenaufbaus innen liegt, sind durch den Prägevorgang entstandene Deformationen unbedeutend. Eventuell auftretende Prägedeformationen kann die Klebeschicht auf der Rückseite des geprägten Halbzeugs ausgleichen. Daher kann bei dem erfindungsgemäßen Verfahren der Prägevorgang selbst hinsichtlich der Prozeßparameter wie Druck, Temperatur und Prägezeit vorrangig auf die Erzeugung bestmöglicher Abformqualitäten der Oberflächenstruktur eingestellt werden, ohne daß die sonst notwendigen Kompromisse zwischen einer noch brauchbaren Qualität der Oberflächenstruktur und Rückseitendeformationen am Datenträgerkörper gefunden werden müssen. Vorzugsweise wird hierbei die Prägung so durchgeführt, daß eine oberflächenbündige Oberflächenstruktur erzeugt wird, d. h. daß die Oberflächenstruktur bündig mit der Datenträgeroberfläche abschließt oder ihr höchstes Niveau unterhalb der Datenträgeroberfläche liegt. Damit sind die Datenträger gut stapelbar und weisen eine verschleißarme Oberfläche auf.

In einer bevorzugten Ausführungsform wird das erste mit der Prägung versehene Halbzeug mit einem zweiten Halbzeug verbunden, in welches vor dem Verbinden ebenfalls eine Oberflächenstruktur eingeprägt wurde. Mit dieser Technik können großflächige Linsenprägungen auch für beide Datenträgerseiten realisiert werden, ohne daß durch den Prägevorgang die Oberflächenqualitäten gegenseitig beeinträchtigt werden.

In einer weiteren bevorzugten Ausführungsform wird in der und/oder auf der der Oberflächenprägung gegenüberliegenden Seite des Halbzeugs eine Gegenprägung erzeugt. Dies geschieht vorzugsweise gleichzeitig beim Einprägen der Oberflächenstruktur in die Oberfläche des Halbzeugs, indem eine Prägeeinrichtung verwendet wird, bei der der dem eigentlichen Prägestempel gegenüberliegende Gegenstempel, welcher gegen die Rückseite des Halbzeugs drückt, ebenfalls mit einer Struktur versehen ist. Alternativ oder zusätzlich zu einer solchen Gegeneinprägung können Abprägungen von speziellen Schichten durchgeführt werden So bietet es sich beispielsweise bei transparenten Aufbauten an, eine Transferprägung einer Laseraufzeichnungsschicht auf die Rückseite des Halbzeugs durchzuführen, um in einem nachfolgenden Schritt zur Erzeugung eines MLIs die gewünschten Bilder oder sonstigen Informationen in diese Schicht einzuschreiben. Es kann sich auch um eine Abprägung einer bestimmten Farbschicht oder dergleichen handeln. Diese Abprägungen können beispielsweise mittels Transferbändern durchgeführt werden, die zwischen der Rückseite des Halbzeugs und dem Gegenstempel verlaufen.

In einer Variante des Verfahrens wird zur Erzeugung eines besonders dünnen Datenträgers bereichsweise eine Kunststoffschicht zur Prägung der Oberflächenstmktur auf eine dünne Materialschicht, beispielsweise eine Papierschicht oder eine Dünnschichtfolie, appliziert. Diese Kunststoffschicht kann beispielsweise in Form eines Labels auf die Papierbahn oder die Dünnschichtfolie aufgebracht werden, wobei es sich anbietet, ein Transferprägeverfahren zu verwenden. Vorteilhaft erfolgt beim Transferprägen gleichzeitig die Prägung der Oberflächenstruktur. So kann auf einfache Weise ein Dünnschichtdatenträger mit einer Oberflächenstruktur erzeugt werden.

Die Erfindung wird im Folgenden anhand von Ausführungsbeispielen unter Hinweis auf die Zeichnung näher erläutert. Es stellen dar:
- Figur 1: eine Darstellung eines Verfahrensablaufs zur Herstellung eines Datenträgers,
- Figur 2: einen Teilschnitt durch ein Halbzeug bei der Prägung an der Position A im Verfahrensablauf gemäß Figur 1,
- Figur 3: einen Teilschnitt durch einen fertigen Datenträgerverbund an der Position B im Verfahrensablauf gemäß Figur 1,
- Figur 4: einen Querschmtt durch ein Halbzeug während der Oberflächenprägung bei gleichzeitiger Transferprägung einer Schicht auf die Rückseite des Halbzeugs,
- Figur 5: eine Darstellung einer Transferprägung einer etikettenförmigen Kunststoffschicht auf eine dünne Materialschicht zur Erzeugung eines Dünnschicht datenträgers,
- Figur 6: einen Schnitt durch die etikettenförmige Kunststoffschicht zum Auftragen auf die dünne Materialschicht gemäß Figur 5,
- Figur 7: einen Teilschnitt durch den Dünnschicht dartenträger während einer gleichzeitigen Oberflächenstruktur- und Transferprägung an der Position C in Figur 5.

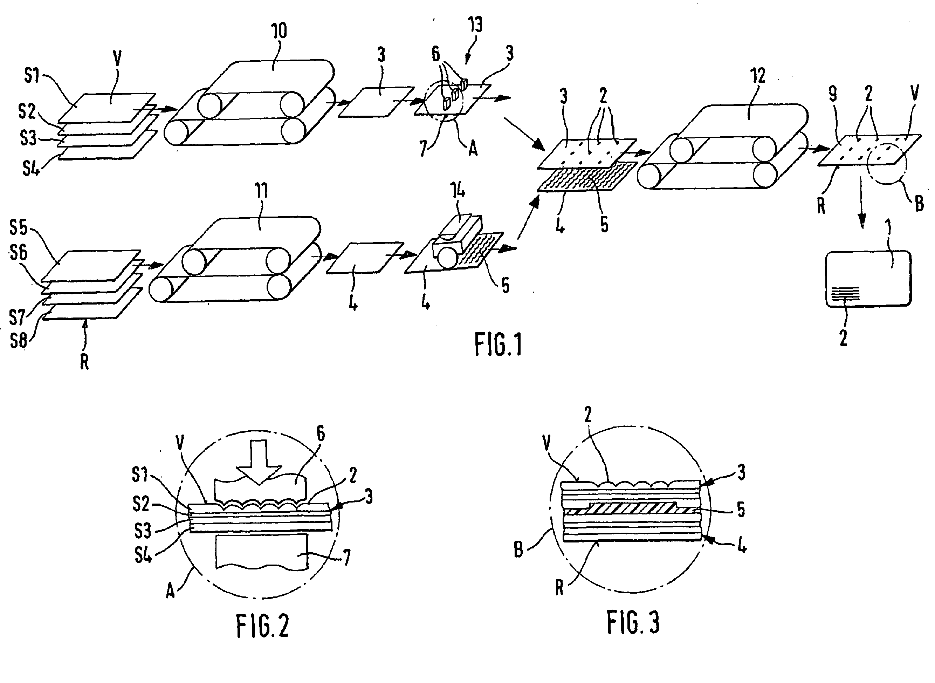

Figur 1 zeigt einen Verfahrensablauf zur Herstellung eines mehrschichtigen Datenträgers 1 durch Zusammenfügen von Halbzeugen 3, 4, wobei die Halbzeuge 3, 4 jeweils in Form von Halbzeugbögen mit mehreren Nutzen hergestellt werden. Im folgenden wird für die Halbzeuge 3, stets von der Form eines Halbzeugbogens ausgegeangen. Anstelle von Halbzeugbögen können aber auch entsprechende Halbzeugbahnen, z. B. in Form von Endlosbändern, erzeugt werden.

Erste Phase des in Figur 1 gezeigten Herstellungsverfahrens bildet die Erzeugung von Halbzeugbogen 3, 4. Eine Mehrzahl von übereinandergelegten gleichartigen oder verschiedenen Schichten S1 bis S4 wird hierzu in einer ersten Verbindungsstation 10 zu einem mehrschichtigen Halbzeugbogen 3 verbunden. Die Verbindungsstation 10 ist als Heißlaminierzone ausgeführt, vorzugsweise ermöglicht sie eine kontinuierliche Durchlauflaminierung.

In den mehrschichtigen Halbzeugbogen 3 wird anschließend in einer nachgeordneten Prägestation 13 eine gewünschte Oberflächenstruktur 2 eingeprägt. Das Prägen erfolgt zweckmäßig so, daß die Oberflächenstruktur 2 bündig mit der Oberfläche, hier der Vorderseite V des Halbzeugbogens 3, abschließt. Bei der Oberflächenstruktur 2 handelt es sich vorzugsweise um eine Linsenstruktur, wie sie einleitend beschrieben wurde.

Der Prägevorgang ist in Figur 2 vergrößert dargestellt. Die Prägestation 13 weist einen Prägestempel 6 mit einem Negativ der gewünschten Oberflächenstruktur 2 sowie einen ihm gegenüber angeordneten Gegenstempel 7 auf. Um die Oberflächenstruktur 2 leichter in das Kunststoffmaterial des Halbzeugs 3 einzubringen zu können, wird der Prägestempel 6 auf eine bestimmte Temperatur erwärmt.

Bei der oberen Schicht S1 des Halbzeugs 3 kann es sich um eine transparente Schicht handeln. Die darunter liegende Schicht S2 ist dann beispielsweise eine Schicht, welche mittels eines Lasers mit einer bestimmten Wellenlänge beschrieben werden kann. Zweckmäßig umfaßt die Prägestation 13 mehrere, beispielsweise in Reihen und Spalten nebeneinander angeordnete; Prägestempel 6 und Gegenstempel 7, so daß die Oberflächenstruktur 2 gleichzeitig für jeden Nutzen auf einem Halbzeugbogen 3 eingeprägt werden kann.

Von der Prägestation 13 wird der Halbzeugbogen 3 beispielsweise über Transportbänder mit einem zweiten, mehrschichtigen Halbzeugbogen 4 zusammengeführt. Der zweite Halbzeugbogen 4 wurde zweckmäßig, wie in Fig.1 angedeutet, analog zum Halbzeugbogen 3 hergestellt, d.h. ebenfalls aus einer Mehrzahl von Schichten S5 bis S8 in einer Heißlaminierzone 11 erzeugt.

In einem nachfolgenden Schritt wird der zweite Halbzeugbogen 4 in einer Beschichtungsstation 14 auf einer Seite mit einer Klebeschicht 5 versehen. Die der Klebeschicht 5 gegenüberliegende Seite des zweiten Halbzeugbogens 4 bildet die spätere Rückseite R der fertigen Datenträgers 1.

Die beiden Halbzeugbögen 3 und 4 werden danach so zusammengeführt, daß die Klebeschicht 5 sich zwischen den Halbzeugbögen 3,4 befindet und die in den Halbzeugbogen 3 geprägte Oberflächenstruktur 2 außen liegt. Die derart zusammengebrachten Halbzeugbögen 3, 4 werden an eine Fügestation 12 übergeben, welche eine Kaltlaminierzone aufweist. Darin werden die Halbzeugbögen 3, 4 zusammengepreßt und durch die Wirkung der Klebeschicht 5 verbunden. Bei dem Preßvorgang wird die Temperatur so geführt, daß einerseits die Klebeschicht 5 oder gegebenenfalls eine oder mehrere dazu vorbereiteter Schichten S2 bis S8 erweichen, daß aber andererseits die auf dem Halbzeugbogen 3 befindliche Oberflächenstruktur 2 nicht beschädigt wird.

Durch den Preßvorgang in der Fügestation 12 werden Unebenheiten auf der innenliegenden Rückseite des Halbzeugbogens 3 ausgeglichen. Am Ausgang der Fügestation 12 liegt ein fertiger Kartenverbund 9 in Gestalt eines Bogens vor, in dem zweckmäßig eine Mehrzahl von Datenträgern 1 in mehreren in Spalten und Reihen nebeneinander angelegt ist.

Figur 3 zeigt einen vergrößerten Querschnitt durch eine solchen Kartenverbund 9 im Bereich einer Oberflächenstruktur 2. Vorderseite V und Rückseite R liegen danach völlig plan zueinander und weisen, abgesehen von der Oberflächenstruktur 2, keinerlei Deformation auf.
Eventuell durch den Gegenstempel 7 in der Prägestation 13 auf der Rückseite des ersten Halbzeugs 3 unter der Oberflächenstruktur 2 erzeugte Deformationen wurden vor allem durch Klebeschicht 5 vollständig ausgeglichen.

In einem abschließenden Schritt werden die einzelnen Datenträger 1 in einer geeigneten Stanz- oder Schneideeinrichtung aus dem Kartenverbund 9 herausgelöst, beispielsweise ausgeschnitten oder ausgestanzt. Das Endprodukt ist ein Datenträger 1 mit der gewünschten Oberflächenstruktur 2.

Vorstehend wurden nur die für die Herstellung eines Datenträgers 1 wesentlichen Verfahrensschritte beschrieben. Innerhalb des Verfahrensablaufs oder an seinem Ende können daneben noch weitere Verfahrensschritte zwischen- oder nachgeschaltet sein, wie etwa Verfahrensschritte, um ein Funktionselement, insbesondere ein Chipmodul, in den Datenträger 1 einzubringen, oder Verfahrensschritte, bei denen mittels eines Lasers durch die Oberflächenstruktur 2 hindurch Informationen zur Erzeugung eines Kippbilds eingeschrieben werden.

Ebenso ist es möglich, den Verfahrensablauf im Rahmen des beschriebenen Grundkonzeptes zu modifizieren. So kann etwa die Klebeschicht 5 auch auf der von der Oberflächenstruktur 2 abgewandten Rückseite des ersten Halbzeugs 3 aufgebracht werden. Möglich ist es auch, einen Zweikomponentenkleber zu verwenden und die beiden Komponenten jeweils getrennt auf die beiden Halbzeugbögen 3,4 aufzutragen, so daß die Komponenten erst beim Zusammenfügen der beiden Halbzeugbögen 3, 4 miteinander reagieren. Ebenso kann z. B. nur eine Heißlaminierzone verwendet werden, in der sowohl der erste Halbzeugbogen 3, in welchem die Oberflächenstruktur 2 eingeprägt wird, als auch der zweite Halbzeugbogen 4 laminiert werden. Anschließend werden in diesem Fall die beiden Halbzeugbögen 3,4 über unterschiedliche Transportwege und/oder Zwischenlager den weiteren Stationen zugeführt bzw. zusammengeführt.

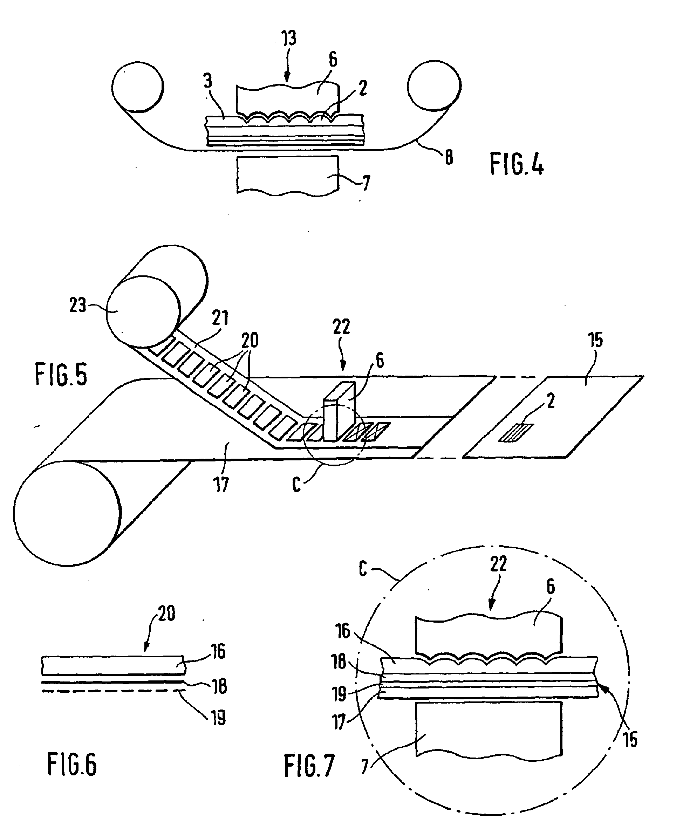

Figur 4 zeigt eine Variante der Prägestation 13. Hierbei wird gleichzeitig mit dem Einprägen der Oberflächenstruktur 2 in den ersten Halbzeugbogen 3 mittels des Gegenstempels 7 auf der Rückseite eine Beschichtung aufgeprägt. Zwischen der Rückseite des Halbzeugbogens 3 und dem Gegenstempel 7 verläuft hierzu ein Transferband 8, d. h. ein Trägerband, das auf der der Rückseite des Halbzeugbogens 3 zugewandten Seite eine Beschichtung aufweist, welche beim Prägen im Bereich des Gegenstempels 7 auf die Rückseite des Halbzeugbogens 3 übertragen wird. Bei der Beschichtung kann es sich zum Beispiel um eine lasersensitive Schicht, um eine Leitstruktur oder ein Farblayout handeln. Die Verwendung einer lasersensitiven Schicht oder eines Farblayouts ist vor allem dann sinnvoll, wenn der Halbzeugbogen 3 selbst aus transparentem Material aufgebaut ist In einer weiteren Variante weist der Gegenstempel 7 ebenfalls eine Prägestruktur auf.

Bei etwas geringeren Anforderungen hinsichtlich der Güte der Oberflächenplanheit eignet sich das hier beschriebene Herstellungsverfahren zur kostengünstigen Erzeugung besonders dünner Datenträger 15. Eine hierzu geeignete Verfahrensausgestaltung ist in den Figuren 5 bis 7 veranschaulicht

Grundlage der herzustellenden Datenträger 15 bildet jetzt eine Papierbahn 17 oder alternativ eine Dürmschichtfolie. Auf die Papierbahn 17 wird bereichsweise dort, wo nachfolgend die Oberflächenstruktur 2 eingeprägt werden soll, eine Kunststoffschicht 16 aufgebracht Die Kunststoffschicht 16 ist hierzu, vorzugsweise durch Stanzen in Etikettenform vorbereitet und besteht aus einzelnen Labels 20. Die Labels 20 sind auf einer Trägerbahn 21 ausgebildet, welche von einer Rolle 23 abgewickelt wird.

Figur 6 zeigt vergrößert den Schichtaufbau der Labels 20. Er besteht aus der Kunststoffschicht 16 zur Aufnahme der Oberflächenstruktur 2, einer darunter befindlichen lasersensitiven Aufzeichnungsschicht 18 sowie einer darunter befindlichen Heißsiegelschicht 19 zur Verbindung mit der Papierbahn 17.

Das Zusammenfügen der Labels 20 mit der Papierbahn 17 und das Einprägen der Oberflächenstruktur 2 sind bei der in Fig. 5 gezeigten Verfahrensausgestaltung in einer einzigen Verbindungsstation 22 integriert Darin werden gleichzeitig die Oberflächenstruktur 2 in die Kunststoffschicht 16 eingeprägt und das Label 20 unter Einwirkung von Wärme mittels eines Transferprägevorgangs auf die Papierbahn 17 appliziert. Alternativ ist es wiederum auch mögliche zunächst in einem ersten Schritt die Einprägung der Oberflächenstruktur 2 vorzunehmen und in einem nachfolgenden Schritt die Kunststoffschicht 16 bzw. das Label 20 auf die Papierbahn 17 aufzubringen.

End-produkt ist ein tragbaren Datenträgen 15 mit einem dünnen Aufbau, welches an einer gewünschten Position eine Kunststoffschicht mit einer Oberflächenprägung 2 aufweist. Zur Aufbringung in einem kombinierten Transfer-Prägeprozeß geeignete Oberflächenstrukturen 2 sind MLIs. Die Erfindung bietet insgesamt eine prozeßsichere Methode mit hoher Produktsicherheit zur Erzeugung von beliebigen Oberflächenstrukturen auf den unterschiedlichsten Datenträgern.

## Patentansprüche

1. Verfahren zur Herstellung eines tragbaren Datenträgers (1) mit einer auf einer Seite (V) eingeprägten Oberflächenstruktur (2), wobei der Datenträger durch Zusammenfügen mehrerer Schichten (S1 bis S8,16 bis 19) erzeugt wird, mit den Schritten:
Erzeugen eines ersten, mehrschichtigen Halbzeuges (3, 20),
Einprägen der Oberflächenstruktur (2) in das Halbzeug (3, 20) und Verbinden des mit einer Oberflächenstruktur (2) versehenen Halbzeuges (3, 20) mit einem zweiten Halbzeug (4,17) unter Zwischenlage einer Klebeschicht (5,19), **dadurch gekennzeichnet, daß** durch die Klebeschicht (5,19) beim. Einprägen auf der Rückseite des Halbzeuges (3, 20) eventuell entstandene Prägedeformationen ausgeglichen werden.

2. Verfahren nach Anspruch 1, **dadurch gekennzeichnet, daß** das erste Halbzeug (3,20) mittels eines Laminierverfahrens erzeugt wird.

3. Verfahren nach Anspruch 1, **dadurch gekennzeichnet, daß** das zweite Halbzeug von einer Einzelschicht (17) gebildet wird.

4. Verfahren nach Anspruch 1, **dadurch gekennzeichnet, daß** das zweite Halbzeug (4) aus mehreren Schichten (S5, S6, S7*,* 58) aufgebaut ist

5. Verfahren nach Anspruch 1, **dadurch gekennzeichnet, daß** die Oberflächenstruktur (2) am fertigen Datenträger (1) nur einen Teilbereich seiner Oberfläche überdeckt.

6. Verfahren nach Anspruch 1 oder 2, **dadurch gekennzeichnet, daß** im zweiten Halbzeug (4) vor dem Verbinden ebenfalls eine Oberflächenstruktur (2) eingeprägt wird.

7. Verfahren nach einem der Ansprüche 1 bis 3, **dadurch gekennzeichnet, daß** in der und/oder auf der der Oberflächenprägung (2) gegenüberliegende Seite des Halbzeugs (3) eine Gegenprägung erzeugt wird.

8. Verfahren nach Anspruch 7, **dadurch gekennzeichnet, daß** die Gegenprägung ein Aufbringen einer Materialschicht umfaßt.

9. Verfahren nach einem der Ansprüche 1 bis 7, **dadurch gekennzeichnet, daß** das erste Halbzeug (3) ein Halbzeugbogen oder eine Halbzeugbahn mit mehreren Nutzen ist,
in dem Halbzeugbogen oder der Halbzeugbahn die Oberflächenstrukturen (2) für die einzelnen Nutzen eingeprägt werden,
das Halbzeug (3) danach unter Bildung eines Datenträgerverbunds (9) mit einem bogen- oder bahnförmigen zweiten Halbzeug (4) verbunden wird
und anschließend einzelne Datenträger (1) aus dem Datenträgerverbund (9) herausgelöst werden.

10. Fertigungsanlage zur Herstellung von tragbaren Datenträgern (1), welche auf einer Seite (V) eine eingeprägte Oberflächenstruktur (2) ausweisen, mit einer
Verbindungsstation zum Zusammenfügen von verschiedenen Schichten (S1 bis S8) des Datenträgers (1), einer Prägestation zum Einprägen der O-berflächensäuktur,
einer ersten Verbindungsstation (10) zur Erzeugung eines erster Halbzeugs (3) aus mehreren Schichten (S1 bis S4),
einer der ersten Verbindungsstation (10) nachgeschaltete Prägestation (13) zur Prägung der Oberflächenstruktur (2) in das erste Halbzeug (3), sowie einer der Prägestation.(13) nachgestaltete Fügestation (12) zur Verbindung des ersten Halbzeuges (3) mit einem zweiten Halbzeug (4) unter Zwischenlage einer Klebeschicht (5), **dadurch gekennzeichnet daß** die Fügestation (22) dazu eingerichtet ist, die Halbzeuge (3, 4) zusammenzupressen und sie dabei eine Temperaturführung ermöglicht, durch die die Klebeschicht (5) erweicht wird.

11. Fertigungsanlage nach Anspruch 10, **dadurch gekennzeichnet, daß** der Fügestation (12) eine Beschichtungsstation (14) zum Auftragen der Klebeschicht (5) auf das erste Halbzeug (3) und/oder das zweite Halbzeug (4) vorgeschaltet ist.

12. Fertigungsanlage nach Anspruch 10 oder 11, **gekennzeichnet durch** eine zweite Verbindungsstation (11) zur Erzeugung des zweiten Halbzeugs (4) aus mehreren Schichten (S5 bis S8).

13. Fertigungsanlage nach einem der Ansprüche 10 bis 12, **gekennzeichnet durch** eine der Fügestation (12) vorgeschaltete zweite Prägestation zur Prägung einer Oberflächenstruktur in das zweite Halbzeug (4).

14. Fertigungsanlage nach einem der Ansprüche 10 oder 11 **dadurch gekennzeichnet, daß** die Prägestation (13) und/oder die zweite Prägestation Mittel (8) zum Erzeugen einer Gegenprägung auf der der Oberflächenprägung (2) gegenüberliegenden Seite des Halbzeugs (3) aufweisen.

15. Fertigungsanlage nach Anspruch 14 **dadurch gekennzeichnet, daß** die Mittel (8) zum Erzeugen der Gegenprägung Mittel (8) zum Aufbringen einer Materialschicht umfassen.

16. Fertigungsanlage nach einem der Ansprüche 10 bis 15 **gekennzeichnet durch** eine der Fügestation (12) nachgeschaltete Stanz- und/oder Schneidestation.

## Claims

1. A method for producing a portable data carrier (1) having a surface structure (2) embossed on one side (*V*), the data carrier being produced by joining a plurality of layers (S1 to S8, 16 to 19), having the steps of:
producing a first, multilayer semifinished product (3, 20),
embossing the surface structure (2) into the semifinished product (3, 20) and connecting the semifinished product (3, 20) bearing a surface structure (2) with a second semifinished product (4, 17) with interposition of an adhesive layer (5, 19), **characterized in that** any embossing deformations arising on the back of the semifinished product (3, 20) during embossing are evened out by said adhesive layer (5, 19).

2. The method according to claim 1, **characterized in that** the first semifinished product (3, 20) is produced by a laminating method.

3. The method according to claim 1, **characterized in that** the second semifinished product is formed by a single layer (17).

4. The method according to claim 1, **characterized in that** the second semifinished product (4) is constructed of a plurality of layers (S5, S6, S7, S8).

5. The method according to claim 1, **characterized in that** on the finished data carrier (1) the surface structure (2) covers only a partial area of the surface thereof.

6. The method according to claim 1 or 2, **characterized in that** a surface structure (2) is likewise embossed in the second semifinished product (4) before connection.

7. The method according to any of claims 1 to 3, **characterized in that** a counter-embossing is produced in and/or on the side of the semifinished product (3) opposite the surface embossing (2).

8. The method according to claim 7, **characterized in that** the counter-embossing comprises an application of a layer of material.

9. The method according to any of claims 1 to 7, **characterized in that** the first semifinished product (3) is a semifinished sheet or a semifinished web with a plurality of copies,
the surface structures (2) for the individual copies are embossed in the semifinished sheet or web,
the semifinished product (3) is then connected with a sheet- or web-shaped second semifinished product (4) so as to form a data carrier compound (9), and subsequently individual data carriers (1) are detached from the data carrier compound (9).

10. A manufacturing plant for producing portable data carriers (1) having an embossed surface structure (2) on one side (V), having a
connecting station for joining different layers (S1 to S8) of the data carrier (1), an embossing station for embossing the surface structure,
a first connecting station (10) for producing a first semifinished product (3) from a plurality of layers (S1 to S4),
an embossing station (13) following the first connecting station (10) for embossing the surface structure (2) into the first semifinished product (3), and a joining station (12) following the embossing station (13) for connecting the first semifinished product (3) with a second semifinished product (4) with interposition of an adhesive layer (5), **characterized in that** the joining station (12) is designed for pressing together the semifinished products (3, 4), at the same time permitting a temperature control by which the adhesive layer (5) is softened.

11. The manufacturing plant according to claim 10, **characterized in that** the joining station (12) is preceded by a coating station (14) for applying the adhesive layer (5) to the first semifinished product (3) and/or the second semifinished product (4).

12. The manufacturing plant according to claim 10 or 11, **characterized by** a second connecting station (11) for producing the second semifinished product (4) from a plurality of layers (S5 to S8).

13. The manufacturing plant according to any of claims 10 to 12, **characterized by** a second embossing station preceding the joining station (12) for embossing a surface structure into the second semifinished product (4).

14. The manufacturing plant according to either of claims 10 and 11, **characterized in that** the embossing station (13) and/or the second embossing station has means (8) for producing a counter-embossing on the side of the semifinished product (3) opposite the surface embossing (2).

15. The manufacturing plant according to claim 14, **characterized in that** the means (8) for producing the counter-embossing comprise means (8) for applying a layer of material.

16. The manufacturing plant according to any of claims 10 to 15, **characterized by** a punching and/or cutting station following the joining station (12).

## Revendications

1. Procédé de fabrication d'un support d'informations (1) portable présentant sur une face (V) une structure de surface (2) estampée, le support d'informations étant fabriqué par assemblage de plusieurs couches (S1 à S8, 16 à 19), selon les étapes suivantes :
- fabrication d'un premier produit semi-fini (3, 20) constitué de plusieurs couches,
- gravure de la structure de surface (2) sur le produit semi-fini (3, 20) et assemblage du produit semi-fini (3, 20) pourvu d'une structure de surface (2) avec un deuxième produit semi-fini (4, 17) grâce à l'adjonction intermédiaire d'une couche d'adhésif (5, 19),
**caractérisée en ce que** des déformations d'estampage éventuellement apparues lors de l'estampage sur le verso du produit semi-fini (3, 20) sont compensées grâce à la couche de liaison (5, 19).

2. Procédé selon la revendication 1, **caractérisé en ce que** le premier produit semi-fini (3, 20) est fabriqué au moyen d'un procédé de laminage.

3. Procédé selon la revendication 1, **caractérisé en ce que** le deuxième produit semi-fini est constitué d'une couche unique (17).

4. Procédé selon la revendication 1, **caractérisé en ce que** le deuxième produit semi-fini (4) est formé à partir de plusieurs couches (S5, S6, S7, S8).

5. Procédé selon la revendication 1, **caractérisé en ce que** la structure de surface (2) ne couvre qu'une partie de la surface du support d'informations (1) fini.

6. Procédé selon la revendication 1 ou 2, **caractérisé en ce qu'**une structure de surface (2) est estampée également dans le deuxième produit semi-fini (4) avant l'assemblage.

7. Procédé selon l'une des revendications 1 à 3, **caractérisé en ce que** dans et / ou sur la face du produit semi-fini (3) qui se trouve en face du relief estampé en surface (2), un relief inverse est produit.

8. Procédé selon la revendication 7, **caractérisé en ce que** le relief inverse comprend la pose d'une couche de matière.

9. Procédé selon l'une des revendications 1 à 7, **caractérisé en ce que** le premier produit semi-fini (3) est une feuille ou un ruban de produits semi-finis avec plusieurs usages,
- les structures de surface (2) étant estampées pour chaque usage dans la feuille ou le ruban de produits semi-finis,
- le produit semi-fini (3) étant ensuite joint à un deuxième produit semi-fini (4) sous forme de feuille ou de ruban en formant un ensemble de supports d'informations (9), et
- chaque support d'informations pouvant alors être détaché de l'ensemble des supports d'informations (9).

10. Installation de fabrication destinée à la fabrication de supports d'informations (1) portables présentant sur une face (V) une structure de surface (2) estampée, avec:
- une station de liaison pour l'assemblage de différentes couches (S1 à S8) du support d'informations (1), une station d'estampage pour estamper la structure de surface,
- une première station de liaison (10) pour la fabrication d'un premier produit semi-fini (3) à partir de plusieurs couches (S 1 à S4),
- une station d'estampage (13) placée après la première station de liaison (10) et destinée à estamper la structure de surface (2) dans le premier produit semi-fini (3),
ainsi qu'une station d'assemblage (12) placée après la station d'estampage (13) et destinée à relier le premier produit semi-fini (3) avec un deuxième produit semi-fini (4) grâce à l'adjonction intermédiaire d'une couche d'adhésif (5), **caractérisée en ce que** la station d'assemblage (12) est conçue pour presser les produits semi-finis (3, 4) ensemble, et permet de maintenir lors de cette opération une température permettant de ramollir la couche d'adhésif (5).

11. Installation de fabrication selon la revendication 10, **caractérisée en ce que** la station d'assemblage (12) est précédée d'une station d'enduction (14) destinée à déposer la couche d'adhésif (5) sur le premier produit semi-fini (3) et / ou sur le deuxième produit semi-fini (4).

12. Installation de fabrication selon la revendication 10 ou 11, **caractérisée par** une deuxième station de liaison (11) destinée à fabriquer le deuxième produit semi-fini (4) à partir de plusieurs couches (S5 à S8).

13. Installation de fabrication selon l'une des revendications 10 à 12, **caractérisée par** une deuxième station d'estampage placée avant la station d'assemblage (12) et destinée à estamper une structure de surface dans le deuxième produit semi-fini (4).

14. Installation de fabrication selon l'une des revendications 10 ou 11, **caractérisée en ce que** la station d'estampage (13) et / ou la deuxième station d'estampage présentent des moyens (8) permettant de produire un contre-relief sur la face du produit semi-fini (3) qui se trouve en face du relief estampé en surface (2).

15. Installation de fabrication selon la revendication 14, **caractérisée en ce que** les moyens (8) permettant de produire le contre-relief comprennent des moyens (8) permettant de déposer une couche de matière.

16. Installation de fabrication selon l'une des revendications 10 à 15, **caractérisée par** une station de poinçonnage et / ou de découpage placée après la station d'assemblage (12).
